# EUROPEAN PATENT SPECIFICATION

(11) **EP 2 696 650 B1**
(45) Date of publication and mention of the grant of the patent: **09.11.2016**
(21) Application number: 11765093.7
(22) Date of filing: 12.05.2011
(51) Int. Cl.: H04W 88/08

(54) **BASE STATION**
BASISSTATION
STATION DE BASE

(43) Date of publication of application: 12.02.2014
(73) Proprietor: Huawei Technologies Co., Ltd., Longgang District Shenzhen, Guangdong 518129 (CN)
(72) Inventor: FENG, Liexun, Shenzhen Guangdong 518129 (CN); XING, Feng, Shenzhen Guangdong 518129 (CN)
(74) Representative: Pfenning, Meinig & Partner mbB
(86) International application number: PCT/CN2011/073995
(87) International publication number: WO 2011/124175

(56) References cited:
- WO-A1-2011/050491
- WO-A2-2010/038227
- CN-A- 101 159 933
- CN-A- 101 868 055
- CN-U- 201 536 427
- CN-U- 201 536 427
- CN-Y- 201 403 093
- DE-A1- 19 719 507
- PING GONG ET AL: "Radio resource allocation for multiuser OFDMA distributed antenna systems", NETWORK INFRASTRUCTURE AND DIGITAL CONTENT, 2009. IC-NIDC 2009. IEEE INTERNATIONAL CONFERENCE ON, IEEE, PISCATAWAY, NJ, USA, 6 November 2009 (2009-11-06), pages 912-916, XP031585903, ISBN: 978-1-4244-4898-2

## Description

### TECHNICAL FIELD

Embodiments of the present invention relate to communications technologies, and in particular, to a base station.

### BACKGROUND

A distributed base station is a commonly used form of a base station at present. The distributed base station is mainly composed of a base band unit (Base Band Unit, BBU for short), remote radio units (Remote Radio Unit, RRU for short), and antennas, where the BBU and the RRUs are connected through optical fibers. A typical installation manner is that the BBU is arranged in an indoor or outdoor cabinet (a distributed base station cabinet), while the RRUs are arranged on a tower close to the antennas.

However, when the strength of the tower is insufficient or no installation position is available on the tower, the RRUs may also be installed on a pole or a stand under the tower. Because the RRUs are installed on the pole or the stand under the tower and positions of the RRUs are low, the RRUs may be damaged easily. Therefore, a normal operation of the base station is affected.

WO2010038227A1 discloses a multi-transmitter base station for wireless digital communication, having beam forming and digital pre-distortion capabilities, wherein the base station comprises a BBU and three RRUs which are included in the same enclosure; the RRUs are connected to respective antennas.

DE19719507A1 discloses a cabinet for communication engineering with a frame rack containing at least one module carrier which is constituted to receive a plug-in unit and a ventilating facility for cooling a plug-in unit. The ventilating facility incorporates at least one fan insert having a plurality of vertically blowing axial flow fans and the insert can be integrated with the plug-in carrier by plug-connecting the insert with the carrier. The insert is positioned below the transversal supporting material of the carrier and has at least one plug-connector which is connected to a second plug connector provided on a wiring panel on its back.

### SUMMARY

An embodiment of the present invention provides a base station, used to avoid damage caused to RRUs because the RRUs are installed on a pole or a stand under a tower, so that a normal operation of the base station is ensured.

An embodiment of the present invention provides a base station, which includes a BBU, at least three RRUs, and antennas, and a power supply used to supply power to the at least three RRUs and the BBU, where the BBU is fixed in a cabinet; the at least three RRUs are inserted in a radio frequency subrack of the cabinet positioned above the BBU; the at least three RRUs are connected to the BBU; and the at least three RRUs are also connected to the antennas. The base station further comprises at least two fans, wherein one fan is positioned over the at least three RRUs, and the other fan is positioned under the BBU and over the power supply.

As can be known from the above technical solution, in the embodiments of the present invention, RRUs in a distributed base station are arranged in a macro base station cabinet to form a macro base station including the RRUs, so that a problem of damage easily caused to the RRUs because the RRUs are installed on a pole or a stand under a tower can be avoided, thereby ensuring a normal operation of the base station.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG 1 is a schematic far view of a base station according to an embodiment of the present invention; and
FIG. 2 is a schematic interior view of a macro base station cabinet in a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

An embodiment of the present invention provides a base station, where the base station includes a BBU, at least three RRUs, and antennas. The BBU is fixed in a cabinet, and the at least three RRUs are inserted in a radio frequency subrack of the cabinet. Moreover, the at least three RRUs are connected to the BBU, and the at least three RRUs are also connected to the antennas. For ease of description, this embodiment takes a macro base station cabinet as an example of the cabinet for description. However, the present invention is not limited thereto. That is, the cabinet in the base station may also be a base station cabinet of another type.

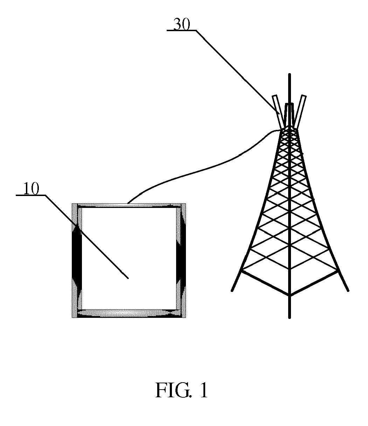

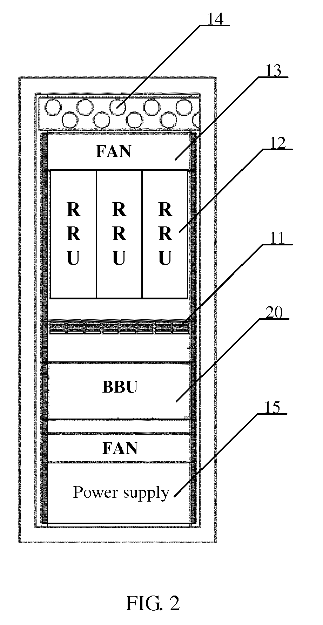

As shown in FIG 1, which is a schematic far view of a base station, the base station includes a macro base station cabinet 10 and antennas 30. As shown in FIG 2, which is a schematic interior view of the macro base station cabinet 10 in the base station, a BBU 20 and at least three RRUs 12 are fixed in the macro base station cabinet 10, where the at least three RRUs 12 may be fixed by insertion into a radio frequency subrack arranged in the macro base station cabinet 10. Moreover, the at least three RRUs 12 are connected to the BBU 20, and the at least three RRUs 12 are also connected to the antennas 30. Optionally, at least two points or at least one surface of the BBU 20 are fixed (for example, suspended) in the macro base station cabinet.

Optionally, the at least three RRUs 12 are connected to the antennas 30 through cables. Optionally, the number of the antennas 30 is the same as that of the RRUs 12, and the RRUs are connected to the antennas in a one-to-one manner. For example, the three antennas 30 shown in FIG. 1 may be connected to the three RRUs 12 shown in FIG. 2, respectively. That is, for each antenna, there is one RRU connected to it. Optionally, the at least three RRUs 12 are connected to the BBU 20 through cables or optical fibers. This embodiment may also adopt other manners to implement connections between the RRUs 12 and the antennas 30 and connections between the RRUs 12 and the BBU 20, which is not limited in the present invention.

Optionally, a cable trough 11 is also arranged in the macro base station cabinet 10 shown in FIG. 2, and the cables or optical fibers may be routed through the cable trough 11 of the macro base station cabinet 10.

Further, the base station provided in this embodiment further includes a power supply. Optionally, the power supply is positioned in the cabinet. The power supply 15 in the macro base station cabinet 10 shown in FIG. 2 is used as an example. The power supply 15 in the macro base station cabinet 10 supplies power to the BBU 20 and the at least three RRUs 12 inserted in the radio frequency subrack, and the cables for connecting the RRUs 12 to the power supply 15 may also be routed through the cable trough 11.

Optionally, the at least three RRUs 12 are vertically inserted in the radio frequency subrack, that is, slots in the radio frequency subrack of the base station are in a vertical direction, so that fixing and heat dissipation are facilitated.

In this embodiment, RRUs in a distributed base station are arranged in a macro base station cabinet, a BBU and the RRUs included in a formed macro base station are all positioned in the macro base station cabinet, so that a problem of damage easily caused to the RRUs because the RRUs are installed on a pole or a stand under a tower can be avoided, thereby ensuring a normal operation of the base station.

Optionally, the radio frequency subrack in this embodiment is a radio frequency subrack with a heat-conducting function, such as cast aluminum. In this way, the heat dissipation area of the RRUs can be increased, and heat dissipation efficiency of the base station is further improved.

Optionally, the base station provided in this embodiment further includes fans. For example, fans (FAN) 13 are arranged in the macro base station cabinet 10. For example, two fans are arranged, where one fan is arranged close to the power supply 15 or the BBU 20, and the other fan is arranged close to the RRUs 12. FIG. 2 is used as an example. One fan is positioned over the three RRUs 12, and the other fan is positioned over the power supply 15 and/or under the BBU 20.

Optionally, the macro base station cabinet 10 in this embodiment has at least one ventilation hole (in most cases, a plurality of ventilation holes) punched, such as ventilation holes 14 on the upper part of the cabinet body of the macro base station cabinet 10 shown in FIG. 2. For another example, ventilation holes may also be punched at the top of the macro base station cabinet 10, so that hot air blown out from the fans can be dissipated outside the macro base station cabinet 10 as quick as possible and cool air outside the macro base station cabinet 10 can also be inhaled into the macro base station cabinet 10. The macro base station cabinet 10 may also have a ventilation hole punched at the bottom of the macro base station cabinet 10 or on the lower part of the cabinet body. For example, the ventilation hole is punched on a position close to the fan of the power supply.

One or more of the exterior, size, volume, and specification of the macro base station cabinet 10 in this embodiment may be the same as that of an existing macro base station (that is, a conventional macro base station).

The base station provided in this embodiment may be not limited to a base station of a certain type; for example, the base station may be a base station (Base Transceiver Station, BTS for short) in a Global System for Mobile Communications (Global System for Mobile Communications, GSM for short), a General Packet Radio Service (General Packet Radio Service, GPRS for short) system, or a Code Division Multiple Access (Code Division Multiple Access, CDMA for short) system, and may also be a base station (NodeB) in a Wideband Code Division Multiple Access (Wideband Code Division Multiple Access, WCDMA for short) system, and may also be an evolved base station (Evolutional Node B, eNB or e-NodeB for short) in a long term evolution (Long Term Evolution, LTE for short) system, which is not limited in the present invention.

The base station provided in the embodiments of the present invention can be applied to various communication systems, such as a GSM system, a GPRS system, a CDMA system, a WCDMA, and an LTE system.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A base station, comprising a base band unit (20), BBU, at least three remote radio units (12), RRUs, antennas (30), and a power supply (15) used to supply power to the at least three RRUs (12) and the BBU (20); the at least three RRUs (12) are connected to the BBU (20); and the at least three RRUs (12) are also connected to the antennas (30); the base station being **characterized in that**:
the BBU (20) is fixed in a cabinet (10);
the at least three RRUs (12) are inserted in a radio frequency subrack of the cabinet positioned above the BBU (20); and
wherein the base station further comprises at least two fans (13), wherein one fan is positioned over the at least three RRUs (12), and the other fan is positioned under the BBU (20) and over the power supply (15).

2. The base station according to claim 1, wherein the at least three RRUs (12) are connected to the antennas (30) through cables.

3. The base station according to claim 1, wherein the at least three RRUs (12) are connected to the BBU (20) through cables or optical fibers.

4. The base station according to claim 2 or 3, wherein the number of the antennas (30) is the same as that of the RRUs (12), and the RRUs (12) are connected to the antennas (30) in a one-to-one manner.

5. The base station according to any one of claims 2 to 4, wherein at least one of the cables and the optical fibers are routed through a cable trough (11) of the cabinet.

6. The base station according to any one of claims 1 to 5, wherein the radio frequency subrack is a radio frequency subrack with a heat-conducting function.

7. The base station according to claim 6, wherein the radio frequency subrack with a heat-conducting function is a cast aluminum product.

8. The base station according to claim 1, wherein the cabinet has ventilation holes (14) punched.

9. The base station according to any one of claims 1 to 8, wherein the at least three RRUs (12) are vertically inserted in the radio frequency subrack.

10. The base station according to any one of claims 1 to 9, wherein the cabinet (10) is a macro base station cabinet.

## Patentansprüche

1. Basisstation, umfassend eine Basisbandeinheit (20), BBU, mindestens drei Fernfunkeinheiten (12), RRUs, Antennen (30) und eine Leistungsversorgung (15),
die zum Versorgen der mindestens drei RRUs (12) und der BBU (20) mit Leistung verwendet wird; wobei die mindestens drei RRUs (12) mit der BBU (20) verbunden sind; und die mindestens drei RRUs (12) außerdem mit den Antennen (30) verbunden sind;
wobei die Basisstation **dadurch gekennzeichnet ist, dass**
die BBU (20) in einem Schrank (10) fixiert ist;
die mindestens drei RRUs (12) in einen Hochfrequenz-Baugruppenträger des Schranks über der BBU (20) positioniert eingeführt sind; und
wobei die Basisstation ferner mindestens zwei Gebläse (13) umfasst, wobei ein Gebläse über den mindestens drei RRUs (12) positioniert ist, und das andere Gebläse unter der BBU (20) und über der Leistungsversorgung (15) positioniert ist.

2. Basisstation nach Anspruch 1, wobei die mindestens drei RRUs (12) durch Kabel mit den Antennen (30) verbunden sind.

3. Basisstation nach Anspruch 1, wobei die mindestens drei RRUs (12) durch Kabel oder optische Fasern mit der BBU (20) verbunden sind.

4. Basisstation nach Anspruch 2 oder 3, wobei die Anzahl von Antennen (30) gleich wie die der RRUs (12) ist, und die RRUs (12) eins zu eins mit den Antennen (30) verbunden sind.

5. Basisstation nach einem der Ansprüche 2 bis 4, wobei mindestens eines von den Kabeln und den optischen Fasern durch eine Kabelwanne (11) des Schranks verlegt ist.

6. Basisstation nach einem der Ansprüche 1 bis 5, wobei der Hochfrequenz-Baugruppenträger ein Hochfrequenz-Baugruppenträger mit einer Wärmeleitfunktion ist.

7. Basisstation nach Anspruch 6, wobei der Hochfrequenz-Baugruppenträger mit einer Wärmeleitfunktion ein Aluminiumgussprodukt ist.

8. Basisstation nach Anspruch 1, wobei der Schrank Lüftungslöcher (14) aufweist, die gestanzt sind.

9. Basisstation nach einem der Ansprüche 1 bis 8, wobei die mindestens drei RRUs (12) vertikal in den Hochfrequenz-Baugruppenträger eingeführt sind.

10. Basisstation nach einem der Ansprüche 1 bis 9, wobei der Schrank (10) ein Makro-Basisstationsschrank ist.

## Revendications

1. Station de base, comprenant une unité de bande de base (20), BBU (Base Band Unit), au moins trois unités radio distantes (12), RRU (Remote Radio Unit), des antennes (30) et une alimentation en énergie (15) utilisée pour alimenter en énergie les au moins trois RRU (12) et la BBU (20) ; les au moins trois RRU (12) sont connectées à la BBU (20) ; et les au moins trois RRU (12) sont également connectées aux antennes (30) ;
la station de base étant **caractérisée en ce que** :
la BBU (20) est fixée dans une baie (10) ;
les au moins trois RRU (12) sont insérées dans un châssis radiofréquence de la baie positionnée au-dessus de la BBU (20) ; et
dans laquelle la station de base comprend en outre au moins deux ventilateurs (13), dans laquelle un ventilateur est positionné au-dessus des au moins trois RRU (12), et l'autre ventilateur est positionné en dessous de la BBU (20) et au-dessus de l'alimentation électrique (15).

2. Station de base selon la revendication 1, dans laquelle les au moins trois RRU (12) sont connectées aux antennes (30) par l'intermédiaire de câbles.

3. Station de base selon la revendication 1, dans laquelle les au moins trois RRU (12) sont connectées à la BBU (20) par l'intermédiaire de câbles ou de fibres optiques.

4. Station de base selon la revendication 2 ou 3, dans laquelle le nombre des antennes (30) est identique à celui des RRU (12), et les RRU (12) sont connectées aux antennes (30) de manière biunivoque.

5. Station de base selon l'une quelconque des revendications 2 à 4, dans laquelle au moins l'un des câbles et des fibres optiques est acheminé à travers un passage de câbles (11) de la baie.

6. Station de base selon l'une quelconque des revendications 1 à 5, dans laquelle le châssis radiofréquence est un châssis radiofréquence ayant une fonction de conduction thermique.

7. Station de base selon la revendication 6, dans laquelle le châssis radiofréquence ayant une fonction de conduction thermique est un produit en fonte d'aluminium.

8. Station de base selon la revendication 1, dans laquelle la baie présente des orifices de ventilation (14) poinçonnés.

9. Station de base selon l'une quelconque des revendications 1 à 8, dans laquelle les au moins trois RRU (12) sont insérées verticalement dans le châssis radiofréquence.

10. Station de base selon l'une quelconque des revendications 1 à 9, dans laquelle la baie (10) est une baie de macro-station de base.
